(19) Europäisches Patentamt

European Patent Office

Office européen des brevets

(11) **EP 2 390 490 B1**

(12) **EUROPEAN PATENT SPECIFICATION**

(45) Date of publication and mention
of the grant of the patent:
**04.11.2015 Bulletin 2015/45**

(21) Application number: **10753323.4**

(22) Date of filing: **14.01.2010**

(51) Int Cl.:
**F02D 45/00** *(2006.01)*     **F02D 9/02** *(2006.01)*
**F02D 21/08** *(2006.01)*     **F02D 41/08** *(2006.01)*
**F02D 43/00** *(2006.01)*     **F02M 25/07** *(2006.01)*

(86) International application number:
**PCT/JP2010/050343**

(87) International publication number:
**WO 2010/106828 (23.09.2010 Gazette 2010/38)**

(54) **CONTROL DEVICE FOR INTERNAL COMBUSTION ENGINE**

STEUERUNGSVORRICHTUNG FÜR EINEN VERBRENNUNGSMOTOR

DISPOSITIF DE COMMANDE POUR MOTEUR À COMBUSTION INTERNE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **17.03.2009 JP 2009064746**

(43) Date of publication of application:
**30.11.2011 Bulletin 2011/48**

(73) Proprietor: **Honda Motor Co., Ltd.
Minato-ku
Tokyo 107-8556 (JP)**

(72) Inventors:
• **NAJIMA, Shinji
Wako-shi
Saitama 351-0193 (JP)**

• **MAEKAWA, Kouichi
Wako-shi
Saitama 351-0193 (JP)**

(74) Representative: **Weickmann & Weickmann
Postfach 860 820
81635 München (DE)**

(56) References cited:
**EP-A1- 1 205 647     EP-A1- 2 410 161
WO-A1-00/20744     FR-A1- 2 902 832
JP-A- 9 287 494     JP-A- 10 103 119
JP-A- 10 103 119     JP-A- 11 236 845
JP-A- 2005 090 280**

**Description**

Technical Field

The present invention relates to a control device for an internal combustion engine provided with an exhaust gas recirculation mechanism, with the features of the preamble part of claim 1.

Background Art

There has been known an EGR mechanism configured to perform an Exhaust Gas Recirculation (hereinafter, referred to as EGR) which recirculates exhaust gas to an intake air system of an internal combustion engine. The EGR mechanism mixes a part of the exhaust gas to fresh air to lower the oxygen concentration in intake air. Thereby, the intake air combusts at a state in which the oxygen concentration is lower than the atmosphere, and as a result thereof, the peak combustion temperature is lowered, which makes it possible to inhibit the generation of nitrogen oxides (NOX).

In an idling operation of the internal combustion engine, it is possible to inhibit the generation of nitrogen oxides by performing the EGR. However, if the idling state continues for a long time, carbons will adhere to an injection port of a fuel injection nozzle due to EGR to choke the injection port gradually. Accordingly, the fuel injection is difficult to be performed perfectly and the combustion becomes unstable, which may causes a rough idle or an engine stall. Therefore, in conventional arts, if the idling state continues over a predefined time to become a long idling state, EGR is stopped (for example, refer to Japanese Patent Laid-open No. H10-103119).

The amount of EGR is rich by nature in the idling operation, and so is the amount of emission of hydrocarbons (HC). Further, in addition to hydrocarbons, if low combustion temperature and condensed water are included, the three factors will make an environment for tar to be generated easily. If the idling state continues for a long time, the generated tar continues to adhere to the surface of EGR valve. Thereby, if the internal combustion engine is stopped under this situation, the EGR valve will be closed with a great mount of tar adhered to the surface. Afterwards, if the internal combustion engine cools down, the tar will solidify to stick the EGR valve consequently. Thus, to protect the EGR valve, EGR is stopped in the long idling state.

A control device with the features of the preamble part of claim 1 is known from JP 2005 090 280A.

Summary of the Invention

Problems to Be Solved by the Invention

However, it has been understood that combustion noise will become worse if EGR is stopped in the long idling state. The total intake air flow remains the same before or after the stop of EGR, and so does the fuel injection control; however, after the stop of EGR, the intake air is completely introduced from the atmosphere, thus, the oxygen concentration in the intake air becomes high, which accelerates the combustion speed. Thereby, rapid combustion occurs, and it has been considered the reason to make worse the combustion noise.

The present invention has been accomplished in view of the aforementioned problems, and it is therefore an object of the present invention to provide a control device and a control method for an internal combustion engine capable of inhibiting combustion noise from becoming worse when EGR is stopped in a long idling state.

Means for Solving the Problems

The object of the invention is solved by a control device with the features of claim 1. A control device for an internal combustion engine according to the present invention comprises: an exhaust gas recirculation mechanism configured to recirculate exhaust gas to an intake air system of the internal combustion engine; an intake air flow controller configured to control an intake air flow of the internal combustion engine; and an exhaust gas recirculation stop unit configured to stop the operation of the exhaust gas recirculation mechanism when an idling operation of the internal combustion engine continues for a predefined time, when the exhaust gas recirculation stop unit has stopped the operation of the exhaust gas recirculation mechanism, the intake air flow controller decreases the intake air flow.

According to the control device for the internal combustion engine of the present invention, when the idling operation of the internal combustion engine continues for the predefined time and the operation of the exhaust gas recirculation mechanism has been stopped, the intake air flow is decreased. When the operation of the exhaust gas recirculation mechanism has been stopped, the intake air is completely fresh air, compared with the conventional art in which the total intake air flow remains unchanged even though the operation of the exhaust gas recirculation mechanism has been stopped, the oxygen in the intake air is reduced, which makes it possible to inhibit the combustion speed from becoming faster. Thereby, it is able to inhibit the combustion noise from becoming worse.

The control device for the internal combustion engine according to the present invention is further provided with a desired intake air flow setting unit configured to set a desired intake air flow of the internal combustion engine, when the exhaust gas recirculation stop unit has stopped the operation of the exhaust gas recirculation mechanism, the intake air flow controller controls the intake air flow of the internal combustion engine to be equal to a desired intake air flow reduced by the desired intake air flow setting unit.

Thus, by preliminarily setting an appropriate desired intake air flow, it is possible to inhibit the combustion noise from becoming worse more effectively when the idling operation of the internal combustion engine has been continued for a predefined time and the operation of the exhaust gas recirculation mechanism has been stopped.

The control device for the internal combustion engine according to the present invention is further provided with a fresh air flow detector configured to detect a fresh air flow inhaled into the internal combustion engine, when the internal combustion engine is in the idling operation state and the exhaust gas recirculation mechanism is in operation, the desired intake air flow setting unit sets a sum of the fresh air flow detected by the fresh air flow detector and a flow of fresh-air-equivalent air in the exhaust gas recirculated by the exhaust gas recirculation mechanism when the internal combustion engine is in the idling state and the exhaust gas recirculation mechanism is in operation as the desired intake air flow when the exhaust gas recirculation stop unit has stopped the operation of the exhaust gas recirculation mechanism.

Thus, when the idling operation of the internal combustion engine continues for the predefined time and the operation of the exhaust gas recirculation mechanism has been stopped, the intake air flow equivalent to the fresh air flow in the intake air before the operation of the exhaust gas recirculation mechanism is stopped is set as the desired intake air flow. Therefore, the flow of fresh-air-equivalent air remains unchanged before or after the operation of the exhaust gas recirculation mechanism is stopped; thus, when the exhaust gas recirculation mechanism is stopped, compared with the conventional art in which the intake air flow remains unchanged even though the operation of the exhaust gas recirculation mechanism has been stopped, it is possible to inhibit the combustion noise from becoming worse and also possible to inhibit the generation of nitrogen oxides.

Brief Description of the Drawings

Fig. 1 is a configuration diagram illustrating an internal combustion engine according to a first example;
Fig. 2 is a block diagram illustrating a control device of the internal combustion engine;
Fig. 3 is a flow chart illustrating an operation of the internal combustion engine;
Fig. 4 is a configuration diagram illustrating an internal combustion engine according to an embodiment of the present invention; and
Fig. 5 is a flow chart illustrating an operation of the internal combustion engine.

Mode for Carrying Out the Invention

[First Example]

A first comparative example will be described with reference to the drawings.

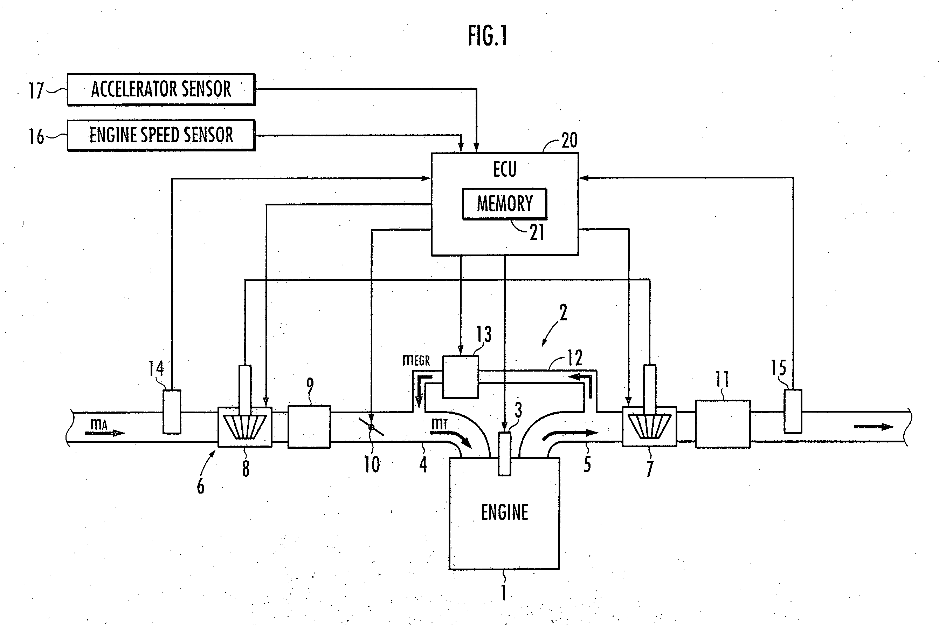

With reference to Fig. 1, an engine 1, namely an internal combustion engine is provided with an EGR mechanism (an exhaust air recirculation mechanism 2. The EGR mechanism 2 recirculates a part of exhaust air from the engine 1 to an intake air system thereof.

The engine 1 is a diesel engine which injects fuel directly into cylinders, and each of the cylinders is disposed with a fuel injection valve 3. The engine 1 is provided with an intake pipe 4 for providing intake air (inhaling air) to the cylinder and an exhaust pipe 5 for discharging exhaust gas from the cylinder.

The intake pipe 4 is disposed with a supercharger 6. The supercharger 6 is provided with a turbine 7 which is driven by the kinetic energy of the exhaust gas from the engine 1 and a compressor 8 which is rotatably driven by the turbine 7 for compressing the intake air. The turbine 7 is provided with a variable vane (not shown) and is configured to regulate supercharge pressure by varying the opening degree of the variable vane.

The downstream of the compressor 8 of the intake pipe 4 is disposed with an intercooler 9 and an intake shutter (throttle valve) 10. The intercooler 9 cools down the compressed air. The intake shutter 10 regulates a flow $m_A$ of fresh air, namely the intake air from the atmosphere by varying the shutter opening degree.

Meanwhile, the downstream side of the turbine 7 of the exhaust pipe 5 is disposed with a catalyst converter 11 for purifying the exhaust gas.

The EGR mechanism 2 is composed of an EGR passage (exhaust gas recirculation passage) 12 for recirculating the exhaust gas to the intake pipe 4 and an EGR valve (exhaust gas recirculation control valve) 13 disposed in the EGR passage 12. The EGR passage 12 is disposed between the upstream side of the turbine 7 of the exhaust pipe 5 and the downstream side of the intake shutter 10 of the intake pipe 4. The EGR valve 13 regulates an EGR flow (flow of the recirculated exhaust gas) $m_{EGR}$ by varying the opening degree of the valve. The total intake air flow (intake air flow) $m_T$ to the engine 1 is the sum of the fresh air flow $m_A$ and the EGR flow $m_{EGR}$.

The upstream of the supercharger 6 of the intake pipe 4 is disposed with a fresh air flow sensor 14 for detecting the fresh air flow $m_A$ to the engine 1. The exhaust pipe 5 is disposed with a Linear Air Fuel Ratio sensor (hereinafter, referred to as LAF sensor) 15 at the immediate upstream of the catalyst converter 11. The LAF sensor 15 outputs an output value $\alpha$ substantially proportional to an air fuel ratio of the exhaust gas from the engine 1.

There are also disposed an engine speed sensor 16 for detecting a speed of rotation Ne of the engine 1 and an accelerator sensor 17 for detecting an accelerator opening degree (depressed amount of accelerator) L of an accelerator pedal (not shown).

Further, there is disposed an electronic control unit (hereinafter, referred to as ECU) 20 composed of a central processing unit (hereinafter, referred to as CPU, not shown) and the like. The ECU 20 comprises an input circuit (not shown) having functions such as shaping input signal waves from each of the sensors 14 to 17, correcting a voltage level to a predefined level, converting analogue signal value to digital signal value and the like, the fuel injection valve 3, the turbine 7, the intake shutter 10, and an output circuit (not shown) for transmitting control signals to the EGR valve 13. Moreover, the ECU 20 comprises a memory 21 for storing various arithmetic programs to be executed in the CPU, arithmetic results thereof and the like.

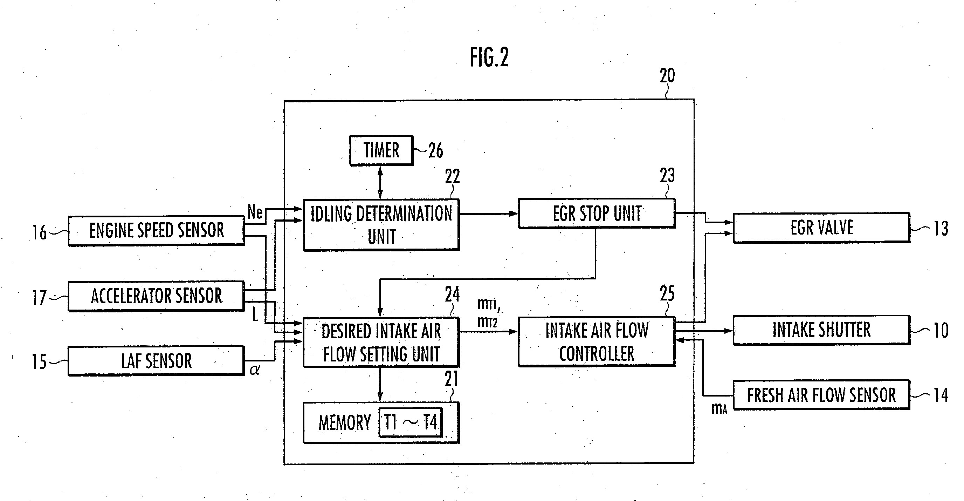

With reference to Fig. 2, the memory 21 is stored with a table T1 for a desired total intake flow $m_{T1}$ defined according to the engine speed of rotation Ne and the accelerator opening degree L in a state other than the long idling state (hereinafter, referred to as a normal state) and a table T2 for a desired total intake flow $m_{T2}$ defined according to the engine speed of rotation Ne in the long idling state.

When the tables T1 and T2 are compared under the condition that the engine speed of rotation Ne is identical and the accelerator opening degree L is zero for both tables, the desired total intake air flow $m_{T2}$ is smaller than the desired intake air flow $m_{T1}$. The tables T1 and T2 are created through real machine experiments and the like in consideration of the balance of fuel consumption, combustion noise and the like. The memory 21 is also stored with a table T3 of opening degrees of the EGR valve 13, a table T4 of injection times and injection timings of the fuel injection valve 3, and the like defined according to the engine speed of rotation Ne, the accelerator opening degree L, the output value $\alpha$ from the LAF sensor 15 and the like, respectively. It should be noted that it is acceptable to store maps in the memory 21 in place of the tables.

The ECU 20 includes an idling determination unit 22, an EGR stop unit 23, a desired intake air flow setting unit 24, an intake air flow controller 25, and a timer 26 as functional processing units.

The idling determination unit 22 is configured to determine whether or not the engine 1 is in an idling state. The idling determination unit 22 determines that the engine 1 is in the idling state if the speed of rotation Ne of the engine 1 is no greater than a predefined speed of rotation and the accelerator opening degree L thereof is equal to zero. If the idling state of the engine 1 continues over a predefined time T, for example 10 minutes or 1 hour, the idling determination unit 22 determines that the engine 1 is in the long idling state. The time is counted by the timer 26.

The EGR stop unit 23 stops the operation of the EGR mechanism 2 by closing the EGR valve 13 when the idling determination unit 22 has determined that the engine 1 is in the long idling state.

The desired intake air flow setting unit 24 is configured to set the desired total intake air flows $m_{T1}$ and $m_{T2}$. In the normal state, the desired intake air flow setting unit 24 acquires the engine speed of rotation Ne and the accelerator opening degree L at present time, searches the table T1 according to the acquired data to set the desired total intake air flow $m_{T1}$. On the other hand, when the engine 1 is in the long idling state, the desired intake air flow setting unit 24 acquires the engine speed of rotation Ne at present time, searches the table T2 according to the acquired data to set the desired total intake air flow $m_{T2}$.

The intake air flow controller 25 performs a feedback control on the shutter opening degree of the intake shutter 10 and the opening degree of the EGR valve 13 so as to make the total intake air flow $m_T$ which is the sum of the fresh air flow $m_A$ detected by the fresh air flow sensor 14 and the EGR flow $m_{EGR}$ recirculated by the EGR mechanism 2 equal to the desired total intake air flow $m_{T1}$ or the desired total intake air flow $m_{T2}$ set by the desired intake air flow setting unit 24. The EGR flow $m_{EGR}$ may be obtained according to the engine speed of rotation Ne, the accelerator opening degree L, the opening degree of the EGR valve 13 and the like.

Accordingly, when the engine 1 falls into the long idling state and the EGR mechanism 2 is stopped by the EGR stop unit 23, the intake air flow controller 25 controls the shutter opening degree of the intake shutter 10 in such a way that the total intake air flow decreases from $m_{T1}$ to $m_{T2}$. It is also acceptable that the intake air flow controller 25 is configured to control the supercharger 6 so as to reduce the total intake air flow $m_T$ of the engine 1.

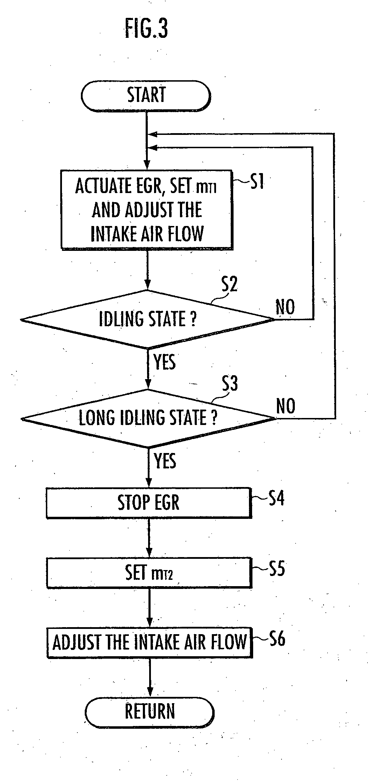

Hereinafter, with reference to the flowchart illustrated in Fig. 3, the operation of the control device for the engine 1 will be described.

First, the adjusting of the intake air flow is performed when the EGR mechanism 2 is in operation (S1). The fresh air flow sensor 14 detects the fresh air flow $m_A$, the LAF sensor 15 detects the sensor value $\alpha$, and the engine speed sensor 16 detects the engine speed of rotation Ne. The desired intake air flow setting unit 24 searches the table T1 according to the detection values to set the desired total intake air flow $m_{T1}$. The intake air flow controller 25 performs the feedback control on the opening degree of the intake shutter 10 so as to make the fresh air flow $m_A$ detected by the fresh air flow sensor 14 equal to a value having the EGR flow $m_{EGR}$ subtracted from the desired total intake air flow $m_{T1}$ set by the desired intake air flow setting unit 24, in other words, to make the total intake air flow $m_T$ (= $m_A+m_{EGR}$) equal to the desired total intake air flow $m_{T1}$. In addition, the controls on such as the opening degrees of the fuel injection valve 3 and the EGR valve 13 are also performed.

Subsequently, the idling determination unit 22 determines whether or not the engine 1 is in the idling state (S2). If it is determined that the engine 1 is in the idling state (S2: YES), then the idling determination unit 22 determines whether or not the engine 1 is in the long idling state (S3). If it is determined that the engine 1 is in the long idling state (S3: YES), the EGR stop unit 23 stops the operation of the EGR mechanism 2 (S4).

Thereafter, the desired intake air flow setting unit 24 searches in the table T2 the desired total intake air flow $m_{T2}$ corresponding to the engine speed of rotation Ne and newly sets it as a desired total intake air flow $m_{T2}$ which is reduced compared to the desired total intake air flow $m_{T1}$ (S5). The intake air flow controller 25 performs a feedback control on the opening degree of the intake shutter 10 to adjust the intake flow so as to make the fresh air flow $m_A$ detected by the fresh air flow sensor 14 equal to the desired total intake air flow $m_{T2}$ (S6).

As above-mentioned, when the engine 1 falls into the long idling state (S3: YES) and the EGR has been stopped the EGR mechanism 2 (S4), the desired intake air flow setting unit 24 newly sets the desired total intake air flow $m_{T2}$ (S5). The desired total intake air flow $m_{T2}$ is acquired with reference to the table T2 and is reduced compared to the desired total intake air flow $m_{T1}$ of the table T1 which is referred to when the engine 1 is in the idling state and the EGR mechanism 2 is in operation. Therefore, the desired total intake air flow $m_T$ is reduced, compared with the conventional art described above in which the total intake air flow remains unchanged even though the operation of the EGR mechanism 2 has been stopped, the oxygen in the intake air is reduced, which makes it possible to inhibit the combustion speed from becoming faster. Thereby, it is able to inhibit the combustion noise from becoming worse. Meanwhile, in comparison with the conventional art described above, it is also possible to inhibit the generation of nitrogen oxides.

[Embodiment]

An embodiment of the present invention will be described with reference to the drawings. The configuration of the second embodiment is similar to the configuration of the first example; therefore, the description will be performed on the differences therebetween.

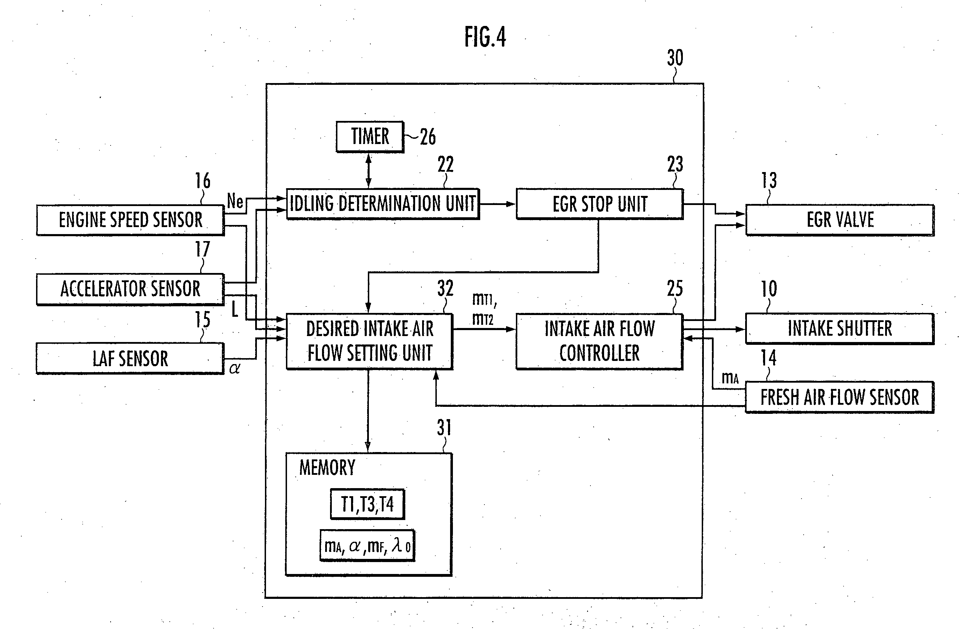

With reference to Fig. 4, the table T2 is not stored in a memory 31 of ECU 30 in the second embodiment. The memory 31 is temporarily stored with the fresh air flow $m_A$ detected by the fresh air flow sensor 14, the sensor value $\alpha$ by the LAF sensor 15, and a fuel injection flow $m_F$ of the fuel injection valve 3. In addition, the memory 31 is stored with a theoretical air fuel ratio $\lambda_0$ (=14.7).

The ECU 30 includes the idling determination unit 22, the EGR stop unit 23, a desired intake air flow setting unit 32, the intake air flow controller 25, and the timer 26 as functional processing units.

The desired intake air flow setting unit 32 constantly updates and stores the fresh air flow $m_A$ detected by the fresh air flow sensor 14, the sensor value $\alpha$ by the LAF sensor 15, and the fuel injection flow $m_F$ of the fuel injection valve 3 in the memory 31 when the engine 1 is in the idling state.

The desired intake air flow setting unit 32 acquires the engine speed of rotation Ne and the accelerator opening degree L at present time, searches the table T1 according to the acquired data to set the desired total intake air flow $m_{T1}$. When the engine 1 falls into the long idling state, the desired intake air flow setting unit 32 sets the desired total intake air flow $m_{T2}$ calculated according to the following expression (1).

$$[0041] \quad m_{T2} = m_A + m_{A(EGR)} \qquad (1)$$

Wherein, $m_{A(EGR)}$ is a flow of fresh-air-equivalent air in the EGR flow $m_{EGR}$ calculated according to the following expression (2).

$$[0042] \quad m_{A(EGR)} = \alpha \cdot \lambda_0 \cdot m_F \qquad (2)$$

Wherein, $m_A$, $\alpha$ and $m_F$ are given with the values in the idling state before the engine 1 falls into the long idling state, for example, the average values during a predefined time before the long idling state. Thus, when the engine 1 falls into the long idling state and the operation of the EGR mechanism 2 has been stopped, the desired total intake air flow $m_{T2}$ decreases from the total intake air flow $m_A+m_{EGR}$ $(= m_{T1})$ by $m_{EGR}-m_{A(EGR)}$. The converted fresh air flow is equivalent to $m_A+m_{A(EGR)}$

The intake air flow controller 25 performs a feedback control on the shutter opening degree of the intake shutter 10 so as to make the fresh air flow $m_A$ detected by the fresh air sensor 14 equal to the desired total intake air flow $m_{T2}$ set by the desired intake air flow setting unit 32.

Accordingly, when the engine 1 falls into the long idling state and the EGR mechanism 2 is stopped by the EGR stop unit 23, the intake air flow controller 25 controls the shutter opening degree of the intake shutter 10 in such a way that the total intake air flow of the engine 1 decreases from $m_{T1}$ to $m_{T2}$. It is also acceptable for the intake air flow controller 25 to control the supercharger 7 so as to reduce the total intake air flow of the engine 1.

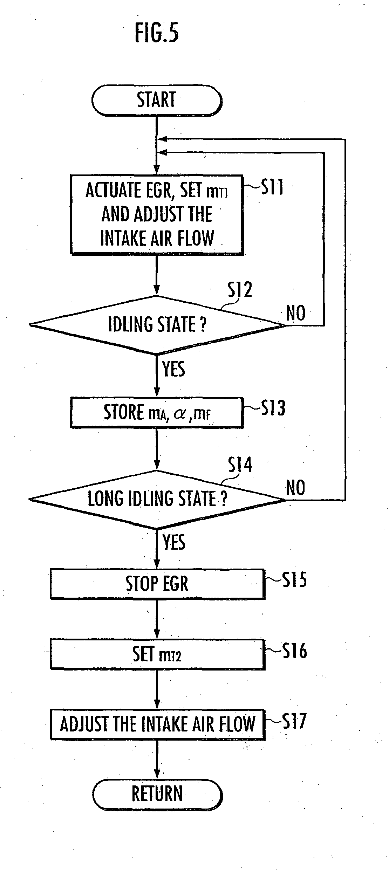

Hereinafter, with reference to the flowchart illustrated in Fig. 5, the operation of the control device for the engine 1 will be described.

First, the same as S1 in the above, the matching of the intake air flow is performed when the EGR mechanism 2 is in operation (S11). Thereafter, the idling determination unit 22 determines whether or not the engine 1 is in the idling state (S12).

If it is determined that the engine 1 is in the idling state (S12: YES), the desired intake air flow setting unit 32 stores the fresh air flow $m_A$, the sensor value $\alpha$ and the fuel injection flow $m_F$ in the memory 31 (S13). Subsequently, the idling determination unit 22 determines whether or not the engine 1 is in the long idling state (S14). If it is determined that the engine 1 is in the long idling state (S 14: YES), the EGR stop unit 23 stops the operation of the EGR mechanism 2 (S15).

Then, the desired intake air flow setting unit 32 calculates the desired total intake air flow $m_{T2}$ by using the expressions (1) and (2) according to the fresh air flow $m_A$, the sensor value $\alpha$, the fuel injection flow $m_F$ and the theoretical air fuel ratio $\lambda_0$, and newly sets it as a desired total intake air flow $m_{T2}$ (S16). The intake air flow controller 33 performs a feedback control on the opening degree of the intake shutter 10 to adjust the intake flow so as to make the fresh air flow $m_A$ detected by the fresh air flow sensor 14 match with the desired total intake air flow $m_{T2}$ set by the desired intake air flow setting unit 32 (S17).

As above-mentioned, when the engine 1 falls into the long idling state (S14: YES) and the EGR stop unit 23 has stopped the operation of the EGR mechanism 2 (S 15), the desired intake air flow setting unit 32 newly sets the desired total intake air flow $m_{T2}$ (S16). The desired total intake air flow $m_{T2}$ is equivalent to the fresh air flow contained in the total intake air flow $m_T$ in the idling state and is reduced compared to the desired total intake air flow $m_{T1}$ in the table T1 when the engine 1 is in the idling state and the EGR mechanism 2 is in operation. Therefore, as the desired total intake air flow $m_T$ is reduced, compared with the conventional art in which the total intake air flow $m_T$ remains unchanged even though the operation of the EGR has been stopped, the oxygen in the intake air is reduced, which makes it possible to inhibit the combustion speed from becoming faster. Thereby, it is able to inhibit the combustion noise from becoming worse. Meanwhile, compared with the conventional art, it is also possible to inhibit the generation of nitrogen oxides.

It should be noted that the present invention is not limited to the embodiments described in the above. For example, in the embodiments, the engine 1 is described as a diesel engine; however, it is acceptable for the engine 1 to be a gasoline engine.

**Claims**

1. A control device (20) for an internal combustion engine (1), comprising:

   a fresh air flow detector (14) configured to detect a fresh air flow ($m_A$) inhaled into the internal combustion engine (1);
   an exhaust gas recirculation mechanism (2) configured to recirculate exhaust gas to an intake air system of the internal combustion engine (1);
   a desired total intake air flow setting unit (32) configured to set a desired total intake air flow ($m_{T1}$, $m_{T2}$) into the internal combustion engine (1);
   an intake air flow controller (25) configured to control a total intake air flow ($m_T$) into the internal combustion engine (1) to make the total intake air flow ($m_T$) into the internal combustion engine (1) equal to the desired total intake air flow ($m_{T1}$, $m_{T2}$) set by the desired total intake air flow setting unit (32);

   **characterized in that** the control device (20) further comprises:

   an exhaust gas recirculation stop unit (23) configured to stop the operation of the exhaust gas recirculation mechanism (2) when an idling operation of the internal combustion engine (1) continues for a predefined time, wherein

the desired total intake air flow setting unit (32) is configured to set a sum ($m_{T2} = m_A + m_{A(EGR)}$) of the fresh air flow ($m_A$) detected by the fresh air flow detector (14) when the internal combustion engine (1) is in the idling operation state and the exhaust gas recirculation mechanism (2) is in operation arid a flow ($m_{A(EGR)} = \alpha \cdot \lambda_0 m_F$) of fresh-air-equivalent air in the exhaust gas recirculated by the exhaust gas recirculation mechanism (2) when the internal combustion engine (1) is in the idling operation state and the exhaust gas recirculation mechanism (2) is in operation as the desired total intake air flow ($m_{T2}$) when the exhaust gas recirculation stop unit (23) has stopped the operation of the exhaust gas recirculation mechanism (2), thus reducing the desired total intake air flow ($m_{T2}$) after the stop of operation of the exhaust gas recirculation mechanism (2) as compared to the desired total intake air flow ($m_{T1}$) before the stop of operation of the exhaust gas recirculation mechanism (2).

## Patentansprüche

1. Steuervorrichtung (20) für einen Verbrennungsmotor (1), welcher aufweist:

einen Frischluftströmungsdetektor (14), der konfiguriert ist, um eine Frischluftströmung ($m_A$) zu erfassen, die in den Verbrennungsmotor (1) gesaugt wird;

einen Abgasrückführmechanismus (2), der konfiguriert ist, um Abgas zu einem Lufteinlasssystem des Verbrennungsmotors (1) zurückzuführen;

eine Soll-Gesamtlufteinlassströmungs-Setzeinheit (32), die konfiguriert ist, um eine Soll-Gesamtlufteinlassströmung ($m_{T1}$, $m_{T2}$) in den Verbrennungsmotor (1) zu setzen;

einen Lufteingangsströmungscontroller (25), der konfiguriert ist, um eine Gesamtlufteinlassströmung ($m_T$) in den Verbrennungsmotor (1) zu steuern/zu regeln, um die Gesamtlufteinlassströmung ($m_T$) in den Verbrennungsmotor (1) gleich der von der Soll-Gesamtlufteinlassströmungs-Setzeinheit (32) gesetzten Soll-Gesamtlufteinlassströmung ($m_{T1}$, $m_{T2}$) zu machen;

**dadurch gekennzeichnet, dass** die Steuervorrichtung (20) ferner aufweist:

eine Abgasrückführstoppeinheit (23), die konfiguriert ist, um den Betrieb des Abgasrückführmechanismus (2) zu stoppen, wenn ein Leerlaufbetrieb des Verbrennungsmotors (1) für eine vordefinierte Zeit fortdauert, wobei die Soll-Gesamtlufteinlassströmungs-Setzeinheit (32) konfiguriert ist, um eine Summe ($m_{T2} = m_A + m_{A(EGR)}$) der vom Frischluftströmungsdetektor (14) erfassten Frischluftströmung ($m_A$), wenn der Verbrennungsmotor (1) im Leerlaufbetriebszustand ist und der Abgasrückführmechanismus (2) in Betrieb ist, und einer Strömung ($m_{A(EGR)} = \alpha \cdot \lambda_0 \cdot m_F$) von frischluftäquivalenter Luft in dem vom Abgasrückführmechanismus (2) rückgeführten Abgas, wenn der Verbrennungsmotor (1) im Leerlaufbetriebszustand ist und der Abgasrückführmechanismus (2) im Betrieb ist, als die Soll-Gesamtlufteinlassströmung ($m_{T2}$) zu setzen, wenn die Abgasrückführstoppeinheit (23) den Betrieb des Abgasrückführmechanismus (2) gestoppt hat, um hierdurch die Soll-Gesamtlufteinlassströmung ($m_{T2}$) nach dem Betriebsstopp des Abgasrückführmechanismus (2) im Vergleich zur Soll-Gesamtlufteinlassströmung ($m_{T1}$) vor dem Betriebsstopp des Abgasrückführmechanismus (2) zu reduzieren.

## Revendications

1. Dispositif de commande (20) pour un moteur à combustion interne (1), comprenant :

un détecteur de débit d'air frais (14) configuré pour détecter un débit d'air frais (mA) entrant dans le moteur à combustion interne (1) ;

un mécanisme de recirculation de gaz d'échappement (2) configuré pour faire recirculer le gaz d'échappement vers un système d'air d'admission du moteur à combustion interne (1) ;

une unité d'établissement de débit d'air d'admission total souhaité (32) configurée pour établir un débit d'air d'admission total souhaité ($m_{T1}$, $m_{T2}$) dans le moteur à combustion interne (1) ;

un contrôleur de débit d'air d'admission (25) configuré pour commander un débit d'air d'admission total ($m_T$) dans le moteur à combustion interne (1) pour faire en sorte que le débit d'air d'admission total ($m_T$) dans le moteur à combustion interne (1) soit égal au débit d'air d'admission total souhaité ($m_{T1}$, $m_{T2}$) établi par l'unité d'établissement de débit d'air d'admission total souhaité (32) ;

**caractérisé en ce que** le dispositif de commande (20) comprend en outre :

une unité d'arrêt de recirculation de gaz d'échappement (23) configurée pour arrêter le fonctionnement du mécanisme de recirculation de gaz d'échappement (2) lorsqu'un fonctionnement au ralenti du moteur à combustion interne (1) se poursuit pendant un temps prédéfini, dans lequel

l'unité d'établissement de débit d'air d'admission total souhaité (32) est configurée pour établir une somme ($m_{T2} = m_A + m_{A(EGR)}$) du débit d'air frais ($m_A$) détecté par le détecteur de débit d'air frais (14) lorsque le moteur à combustion interne (1) est dans un état de fonctionnement au ralenti et que le mécanisme de recirculation de gaz d'échappement (2) est en fonctionnement et d'un débit ($m_{A(EGR)} = \alpha.\lambda_0.m_F$) d'air équivalent à l'air frais dans le gaz d'échappement mis en recirculation par le mécanisme de recirculation de gaz d'échappement (2) lorsque le moteur à combustion interne (1) est dans l'état de fonctionnement au ralenti et que le mécanisme de recirculation de gaz d'échappement (2) est en fonctionnement en tant que débit d'air d'admission total souhaité ($m_{T2}$) lorsque l'unité d'arrêt de recirculation de gaz d'échappement (23) a arrêté le fonctionnement du mécanisme de recirculation de gaz d'échappement (2), réduisant ainsi le débit d'air d'admission total souhaité ($m_{T2}$) après l'arrêt du fonctionnement du mécanisme de recirculation de gaz d'échappement (2) tel que comparé au débit d'air d'admission total souhaité ($m_{T1}$) avant l'arrêt du fonctionnement du mécanisme de recirculation de gaz d'échappement (2).

# FIG.1

## FIG.2

EP 2 390 490 B1

FIG.3

START

ACTUATE EGR, SET $m_{T1}$
AND ADJUST THE
INTAKE AIR FLOW — S1

IDLING STATE ? — S2 → NO

YES

LONG IDLING STATE ? — S3 → NO

YES

STOP EGR — S4

SET $m_{T2}$ — S5

ADJUST THE INTAKE AIR FLOW — S6

RETURN

# FIG.4

TIMER ~26

16
ENGINE SPEED SENSOR

17
ACCELERATOR SENSOR

15
LAF SENSOR

Ne

L

α

22
IDLING DETERMINATION UNIT

23
EGR STOP UNIT

13
EGR VALVE

32
DESIRED INTAKE AIR FLOW SETTING UNIT

$m_{T1}$,
$m_{T2}$

25
INTAKE AIR FLOW CONTROLLER

10
INTAKE SHUTTER

14
FRESH AIR FLOW SENSOR

$m_A$

31
MEMORY

T1,T3,T4

$m_A, \alpha, m_F, \lambda_0$

30

EP 2 390 490 B1

# FIG.5

START

ACTUATE EGR, SET $m_{T1}$ AND ADJUST THE INTAKE AIR FLOW — S11

IDLING STATE ? — S12

NO

YES

STORE $m_A, \alpha, m_F$ — S13

LONG IDLING STATE ? — S14

NO

YES

STOP EGR — S15

SET $m_{T2}$ — S16

ADJUST THE INTAKE AIR FLOW — S17

RETURN

**EP 2 390 490 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10103119 B
- JP 2005090280 A